## Europäisches Patentamt
## European Patent Office
## Office européen des brevets

(11) Publication number: **0 113 685**
**B1**

(12)

# EUROPEAN PATENT SPECIFICATION

(45) Date of publication of patent specification: **08.04.87**

(51) Int. Cl.⁴: **F 16 H 7/08**

(21) Application number: **84200014.3**

(22) Date of filing: **06.01.84**

(54) Mechanical chain-adjusting mechanism providing a constant and/or increasing bias.

(30) Priority: **11.01.83 IT 2044383 u**

(43) Date of publication of application:
**18.07.84 Bulletin 84/29**

(45) Publication of the grant of the patent:
**08.04.87 Bulletin 87/15**

(84) Designated Contracting States:
**BE DE FR GB IT LU NL SE**

(56) References cited:
**DE-B-1 625 114**
**GB-A- 505 746**
**US-A-1 777 527**
**US-A-2 112 157**

(73) Proprietor: **REGINA INDUSTRIA S.r.l.**
**Viale Fulvio Testi 188**
**I-20092 Cinisello Balsamo Milan (IT)**

(72) Inventor: **Gennari, Giuseppe**
**Via Gambate 12**
**Olginate Como (IT)**

(74) Representative: **Martegani, Franco et al**
**Ing. Barzanò & Zanardo Milano S.p.A. Via**
**Borgonuovo, 10**
**I-20121 Milano (IT)**

Courier Press, Leamington Spa, England.

## Description

The present invention relates to a mechanical chain-adjusting mechanism providing a constant and/or increasing bias.

In chain drives there is experienced with the lapse of time, due to the effect of wear of the mating surfaces of pins and bushings, a certain slackening.

Such a slackening is taken up and is not conspicuous due to the pull in the tensioned lap, whereas it is accumulated and made conspicuous in the lashing lap, where it originates lashings and vibrations.

To prevent such lashings in the lashing lap, specially provided chain tighteners are adopted, which can be classified, essentially, in two groups, that is the constant-bias group and the variable-bias group.

The constant-bias group comprises, for example, the tighteners which have a counterweight, which are restricted by the stroke of the counterweight and by the bulk thereof, and chain tighteners which are actuated by pressurized fluids (air or oil) which are exposed to wear and losses with the lapse of time.

The variable-bias group is the most widely used and, in them, the bias is generally provided by a spring: the latter, however, furnishes a bias which is decreased as the chain becomes slackened and the spring becomes unloaded.

As a matter of fact, when both the wear and the lashing are of limited magnitude, the pad of the chain tightener compresses the spring and the latter furnishes a very high bias, whereas, if the chain becomes slackened due to its wear, the bias is much poorer because the spring unloads.

An attempt to solve these problems is known from GB—A—505 746, wherein a tensioning device is disclosed which comprises a pad linked by a pin to a fixed supporting body and coupled by a linkage means to a biasing spring which is housed in a recess of the body which extends spaced from the linking pin of the pad.

The linkage means is substantially a coupling rod pivoted at one end to the pad and resting within an opposite rounded end on the free end of the spring by interposition of a hollow piston member.

However, this device is suitable to correctly operate over a limited range of lashing of the chain owing to the fact that when the linkage means becomes too much slanted with regard to the spring axis as the spring unloads the resilient bias thereof is no longer sufficient to maintain constancy of the pressure of the pad on the chain.

An objective of the present invention is, instead, to provide a device by which the pad of a chain-tightener produces a constant thrust over a high range of positions of the chain, or, under limiting conditions, an increasing thrust as the chain becomes elongated and thus as the pad itself is shifted.

Having this objective in view, according to the invention, there is provided a chain-tightening device of the kind comprising a pad urged by resilient means against the lashing lap of the chain and connected by linkage means to a supporting body, said resilient means and said linkage means being arranged in such a way that the thrust of the pad on the chain is increased or at least kept constant as said resilient means are discharged, characterized in that said linkage means comprise levers which are the sides of an articulated parallelogram, said resilient means acting between the levers such that the arm of application of the resilient bias with respect to a centre of pivotal movement of the lever on the supporting body increases as the resilient means become discharged.

The structural and functional features of a chain-tightener according to this invention will become more clearly apparent from a practical example referred to the accompanying diagrammatical drawings, wherein:

Figure 1 is an elevational view of a chain-tightening device in its fully depressed position with its spring in the maximum load position.

Figure 2 shows the device of Figure 1 in the maximum elevation position.

Figure 3 is a cross-sectional view, taken along the line III—III of Figure 2.

Figures 4 and 5 are detail views of what is shown in Figures 1 and 2 and in which the chain-tightener has a nonreturn unit.

Figure 6 is a cross-sectional view, taken along the line VI—VI of Figure 5.

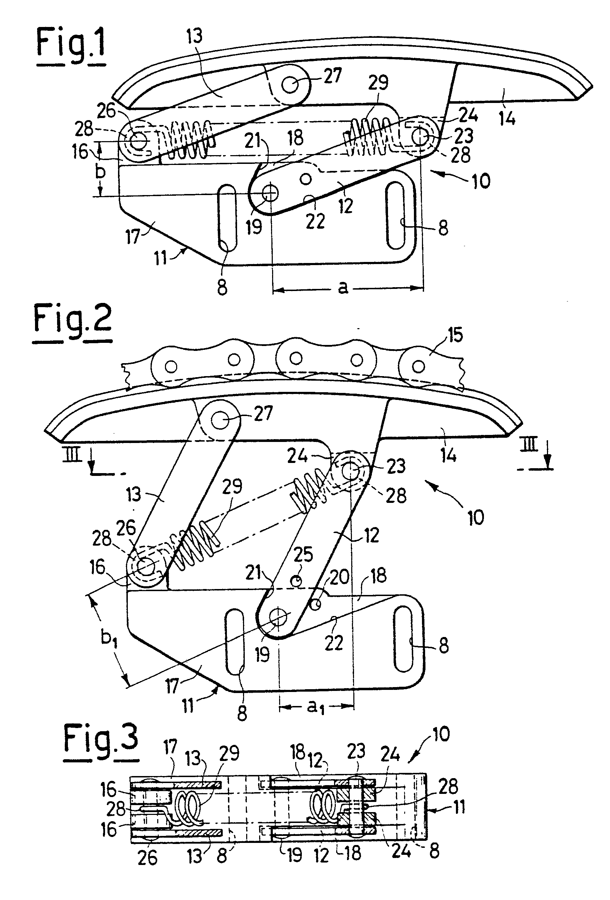

Having now reference to the drawings, a chain-tightening device made according to this invention, and generally indicated at 10, is composed of a supporting body 11 carrying pivotally linkage means in form of a first couple of parallel levers 12 and a second couple of parallel levers 13, both swingable, which bear at their free ends a pad 14 for urging and pressing against a chain 15 (Figures 1 and 2).

The body 11 has slots 8 and carries, at its top region, two spaced apart ears 16 which are bored and has on its sidewalls 17 seats 18 which are provided with bores 19 and 20 running transversally throughout the body 11 as such.

Each seat 18 has an upper abutment 21 and a lower abutment 22 which restrict the swing of the first lever couple 12, the latter being provided to a pin in the bore 19.

The opposite ends of the levers 12 are pivoted at 23 to a couple of bored ears 24, the latter being formed by the pad 14 and being arranged in side by side relationship and spaced apart from one another.

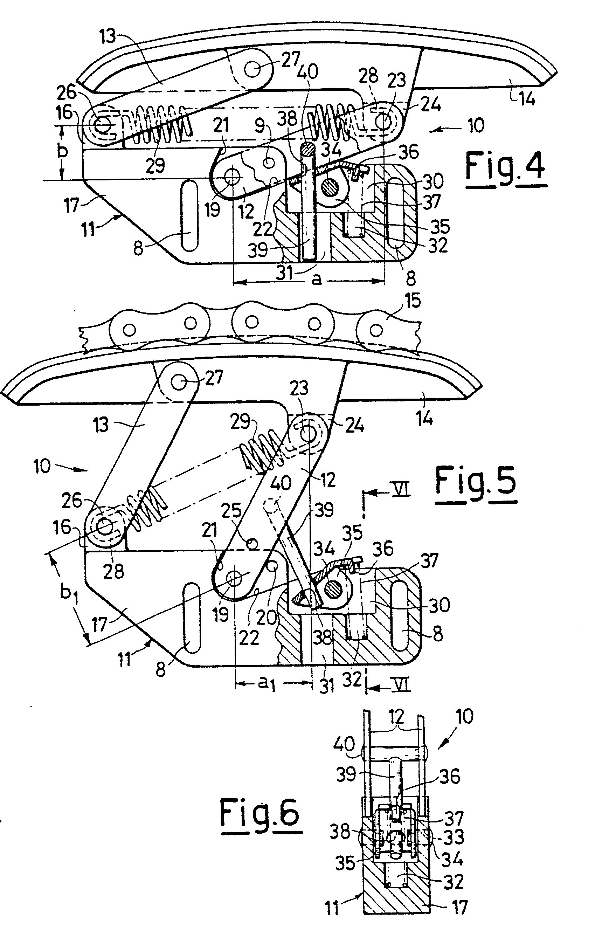

Moreover, the levers 12 carry bores 25 which can be positioned in registry with the bore 20 running through the body 11 (Figure 1), so that they can be latched by a dowel 9 (Figure 4).

The second couple of levers 13 are pivoted at one end at 26 to the bored ears 16 and, at the opposite end, to a bore 27 formed through the pad 14.

End eyelets 28 of resilient means in form of a pull spring 29 are held by the pins 23 and 26, respectively, in the interior of the ears 24 and 16 (Figure 3).

The chain-tightener 10 as described in the foregoing can be equipped with means for preventing the pad 14 from springing back from the position shown in Figure 5 to the position of Figure 4, i.e. towards the supporting body 11. As a matter of fact, in the body 11 there is formed a countersunk seat 30 having a parallelepipedal outline which has on its bottom wall a first through-bore 31 and a second, blind, hole 32.

The walls of the seat 30 have through-bores 33 in which pins 34 are inserted, which bear, for idle rotation, a U-shaped rocker 35; the latter has a curled tooth 36 which can be slipped between the convolutions of a spring 37. Spring 37 is positioned in the second bore 32 and biasses the rocker 35.

The base portion of the rocker 35 has a through-bore 38 in the interior of which a rod 39 can slide: rod 39 has a T-shaped end which is pivoted at 40 to both levers 12.

A chain-tightener so contrived operates as follows. The device 10, as is well known, is positioned in correspondence with the lashing lap of the chain 15 with the pad 14 in mesh with the rollers of the chain as in the position of Figure 1, with the spring 29 in its maximum-load position.

During this positioning stage, the chain-tightener 10 is maintained in that position (Figure 1) by slipping a latching dowel 9 into the bores 25 of the levers 12 and into the bore 20 of the body 11.

Obviously, the load of the spring 29 is considered as being applied along lever arms $b$ and $b_1$ and the bias onto the pad 14 along lever arms $a$ and $a_1$, as can be seen in Figures 1 and 2.

As soon as the chain wear produces a slackening and thus the elongation of the lashing lap of the chain 15, the spring 29, which is loaded and is tensioned between the pivotal pins 26 and 23, tends to rock the levers 12 counterclockwise as viewed in Figures 1 and 2 and urges the pad 14 into contact with the chain 15.

The levers 13 merely display a function of guide for the movement of the pad 14 and also a function of support therefor, and define, together with the pad 14 and the levers 12 and the body 11 something like an articulated parallelogram or quadrilateral, along a diagonal of which there acts the spring 29.

As outlined above, the chain-tightener 10 can be displaced until the sidewalls of the levers 12 engage the upper abutments 21 of the seats 18.

The quite particular arrangement of the spring 29 acting between the levers 12, 13 is such that as its load is decreased, the bias of the pad 14 against the chain 15 is increased, or, under limiting conditions, it is at least kept constant by virtue of the fact that the decrease of the actual lever arm of application $a_1$ of the bias relative to the centres of pivotal movement overcomes the resilient bias decrease, while the arm of application $b_1$ of the resilient bias increases as the resilient means 29 become discharged, so that the thrust displayed by the pad is increased.

The nonreturn unit shown in Figures 4, 5 and 6 is intended to prevent possible oscillations of the pad, which, under certain circumstances, might be such as to impair a correct drive transfer.

As a matter of fact, the rod 39 slides within the bore 38 since it is pulled by the levers 12 as the pad 14 is urged upwards due to the bias of the spring 29, as encouraged so to do by the slackening of the chain 15. Spring 37 compels the rocker 35 to swing about the pins 34 to follow the pulling out of the rod 39, but still a back-spring to the starting position is forestalled due to the angle which is now formed between the rod 39 and the bore 38 of the rocker 35 since this angle becomes sharper and sharper and any return movement is thus prevented.

This example of chain-tightening device 10 is more advisable in the cases in which the lashing lap of the chain can be considered as being virtually straight or set at a slight angle.

In addition, the provision of the slots 8 makes possible a manual takeup of the lashing originated in the chain when the springs 29 cannot urge the pads 14, respectively, any farther.

**Claims**

1. A chain-tightening device of the kind comprising a pad (14) urged by resilient means (29) against the lashing lap of the chain (15) and connected by linkage means (12, 13) to a supporting body (11), said resilient means (29) and said linkage means (12, 13) being arranged in such a way that the thrust of the pad (14) on the chain (15) is increased or at least kept constant as said resilient means (29) are discharged, characterized in that said linkage means (12, 13) comprise levers which are the sides of an articulated parallelogram, said resilient means (29) acting between the levers (12, 13) such that the arm of application of the resilient bias with respect to a centre of pivotal movement of the levers on the supporting body (11) increases as the resilient means (29) become discharged.

2. Chain-tightening device according to claim 1, characterized in that said resilient means (29) act along a diagonal of said parallelogram.

3. Chain-tightening device according to claim 1 or 2, characterized in that said resilient means (29) are pivoted at one end to the pad (14) and at the other end to the body (11).

4. Chain-tightening device according to claim 1, characterized in that said supporting body (11) has slots (8) adapted to the takeup of the chain lashing.

5. Chain-tightening device according to claim 1, characterized in that bores (20) are provided on the supporting body (11) and bores (25) on at least one of the levers (12, 13) so that they can be placed in registry to receive a latching dowel (9) adapted to hold the entire device stationary when said resilient means (29) are under the maximum load conditions.

6. Chain-tightening device according to claim 1, characterized in that it further comprises means (35, 36, 37, 38, 39, 40) to prevent the return of the pad (14) towards the supporting body (11).

**Patentansprüche**

1. Ketten-Spannvorrichtung, bei der ein Führungsrahmen (14) über ein Federglied (29) gegen den Verbindungsfalz der Kette (15) gepreßt und über einen Hebelmechanismus (12, 13) mit einem Stützkörper (11) verbunden ist, wobei das Federglied (29) und der Hebelmechanismus (12, 13) so angeordnet sind, daß sich der Auflagerdruck des Führungsrahmens (14) auf die Kette (15) erhöht oder daß er zumindest konstant gehalten wird, wenn das Federglied (29) entspannt wird,

dadurch gekennzeichnet, daß der Hebelmechanismus (12, 13) Hebel aufweist, die die Seiten eines Gelenk-Parallelogrammes bilden, wobei das Federglied (29) zwischen den Hebeln (12, 13) derart wirkt, daß sich der Hebelarm für die Übertragung der Federvorspannung in Bezug zu einem am Stützkörper (11) vorgesehenen Zentrum einer Schwenkbewegung der Hebel am (11) vergrößert, wenn das Federglied (29) entspannt wird.

2. Ketten-Spannvorrichtung nach Anspruch 1, dadurch gekennzeichnet, daß das Federglied (29) längs einer Diagonalen des Parallelogrammes angreift.

3. Ketten-Spannvorrichtung nach Anspruch 1 oder 2, dadurch gekennzeichnet, daß das Federglied (29) mit seinem einen Ende an der Führungsbahn (14) und mit seinem anderen Ende am Stützkörpers (12) schwenkbar ist.

4. Ketten-Spannvorrrichtung nach Anspruch 1, dadurch gekennzeichnet, daß der Stützkörper (11) Schlitze (8) zur Aufnahme des Kettenfalzes aufweist.

5. Ketten-Spannvorrichtung nach Anspruch 1, dadurch gekennzeichnet, daß am Stützkörper (11) Bohrungen (20) vorgesehen sind, und daß weitere Bohrungen (25) an wenigstens einem der Hebel (12, 13) vorgesehen sind, derart, daß sie in Deckung gebracht werden können, um einen derartigen Verriegelungsdübel aufzunehmen, um die gesamte Vorrichtung fixiert zu halten, wenn das Federglied (29) unter maximalen Belastungsbedingungen steht.

6. Ketten-Spannvorrichtung nach Anspruch 1, gekennzeichnet durch Einrichtungen (35, 36, 37, 38, 39, 40), um eine Umkehr des Führungsrahmens (14) gegen den Stützkörper (11) zu verhindern.

**Revendications**

1. Dispositif de tendeur de chaîne comprenant un patin (14) appliqué par des moyens élastiques (29) contre le creux d'accrochage de la chaîne (15) et relié par des moyens de liaison (12, 13) à un support (11), lesdits moyens élastiques (29) et lesdits moyens de liaison (12, 13) étant disposés de telle manière que la poussée du patin (14) sur la chaîne (15) est accrue ou tout au moins gardée constante quand lesdits moyens élastiques (29) sont détendus, caractérisé en ce que lesdits moyens de liaison (12, 13) comprennent des leviers qui sont les côtés d'un parallélogramme déformable, lesdits moyens élastiques (29) agissant entre les leviers (12, 13) de telle façon que le bras de levier de la tension élastique par rapport à un centre du mouvement de pivotement des leviers sur le support (11) augmente quand les moyens élastiques (29) se détendent.

2. Dispositif tendeur de chaîne selon la revendication 1, caractérisé en ce que lesdits moyens élastiques (29) agissent le long d'une diagonale dudit parallèlogramme.

3. Dispositif tendeur de chaîne selon la revendication 1 ou 2, caractérisé en ce que lesdits moyens élastiques (29) sont articulés, à un bout, sur le patin (14) et, à l'autre bout, sur le support (11).

4. Dispositif tendeur de chaîne selon la revendication 1, caractérisé en ce que ledit support (11) a des lumières (8) adaptées au réglage du mou de la chaîne.

5. Dispositif tendeur de chaîne selon la revendication 1, caractérisé en ce que des trous (20) sont prévus sur le support (11) et des trous (25) sur au moins l'une des leviers (12, 13) de façon à ce qu'ils puissent être placés en alignement pour recevoir une cheville de verrouillage (9) prévue pour maintenir fixe l'ensemble du dispositif quand lesdits moyens élastiques (29) sont en état de charge maximum.

6. Dispositif tendeur de chaîne selon la revendication 1, caractérisé en ce qu'il comprend encore d'autres moyens (35, 36, 37, 38, 39, 40) pour éviter le retour du patin (14) vers le support (11).

Fig.1

Fig.2

Fig.3

Fig.4

Fig.5

Fig.6